# EUROPEAN PATENT APPLICATION

(11) **EP 4 779 707 A1**
(43) Date of publication of application: **22.07.2026**
(21) Application number: 25783499.4
(22) Date of filing: 14.04.2025
(51) Int. Cl.: H01M 4/136, H01M 4/1397, H01M 10/42, H01M 4/62, H01M 10/0525

(54) **POSITIVE ELECTRODE SHEET AND PREPARATION METHOD THEREFOR, AND BATTERY**

(30) Priority: 27.11.2024 CN 202411720673
(71) Applicant: Eve Power Co., Ltd., Jingmen, Hubei 448000 (CN)
(72) Inventor: WEI, Haitao, Jingmen, Hubei 448000 (CN); XING, Xu, Jingmen, Hubei 448000 (CN); ZHU, Weihua, Jingmen, Hubei 448000 (CN); WANG, Kai, Jingmen, Hubei 448000 (CN)
(74) Representative: Studio Torta S.p.A.
(86) International application number: PCT/CN2025/088837
(87) International publication number: WO 2026/113229

(57) **Abstract**

The present application provides a positive electrode sheet and a manufacturing method thereof, and a battery. The positive electrode sheet includes a current collector, a first active material layer and a second active material layer. The first active material layer includes a lithium iron manganese phosphate, a first conductive agent and a first lithium supplement. The second active material layer includes a lithium iron manganese phosphate, a second conductive agent and a second lithium supplement. A gram capacity K1 of the first lithium supplement is greater than a gram capacity K2 of the second lithium supplement. A content D1 of the first conductive agent is greater than a content D2 of the second conductive agent.

## Description

Present application claims priority to Chinese patent application No. 202411720673.4, filed with the Chinese Patent Office on November 27, 2024. The disclosure of the abovementioned application is incorporated herein by reference in its entirety.

### TECHNICAL FIELD

The present application relates to the field of battery technology, and in particular to positive electrode sheets and manufacturing method thereof, and batteries.

### BACKGROUND

Lithium manganese iron phosphate (LMFP) is a positive electrode active material made by adding a certain proportion of manganese to lithium iron phosphate (LFP). LMFP and LFP both belong to the olivine structure, and their theoretical gram capacities are the same, but LMFP has a higher voltage platform, generally up to about 4.1V, higher than LFP's voltage platform of 3.3V~3.5V. Therefore, under the same conditions, the theoretical energy density of LMFP is 15%-20% higher than that of LFP.

### TECHNICAL PROBLEM

However, compared with LFP, LMFP has a poor electronic conductivity and a lithium ion diffusion rate, which makes it impossible for the capacity of LMFP to fully exert the function, and the cycle life of LMFP is not good, especially at high temperatures. In view of the defects of LMFP, the positive electrode is required to be replenished with lithium. In the related art, the application of the lithium supplement in the LMFP system is relatively simple, which makes it difficult for the lithium supplement to exert the function effectively, and thus makes it difficult for the capacity of LMFP to effectively exert the function and improve the cycle life of the battery.

### TECHNICAL SOLUTIONS

The present application provides a positive electrode sheet. The positive electrode sheet includes: a current collector and a first active material layer and a second active material layer disposed on the current collector, where the first active material layer and the second active material layer are sequentially disposed in a direction away from the current collector; the first active material layer and the second active material layer both contain lithium iron manganese phosphate; the first active material layer further contains a first conductive agent and a first lithium supplement, and the second active material layer further contains a second conductive agent and a second lithium supplement; the gram capacity K1 of the first lithium supplement is greater than the gram capacity K2 of the second lithium supplement; the weight percentage D1 of the first conductive agent in the first active material layer is greater than the weight percentage D2 of the second conductive agent in the second active material layer.

The present application also provides a method for manufacturing a positive electrode sheet. The method for manufacturing a positive electrode sheet is used to manufacture the above-mentioned positive electrode sheet, and the method for manufacturing a positive electrode sheet includes:
providing a first slurry, where the first slurry contains lithium manganese iron phosphate, a first conductive agent and a first lithium supplement;
providing a second slurry, the second slurry contains lithium manganese iron phosphate, a second conductive agent and a second lithium supplement;
performing a film-forming process on the first slurry on a current collector to obtain a first active material layer;
performing a film-forming treatment on the second slurry on a side of the first active material layer away from the current collector to obtain a second active material layer, thereby obtaining a positive electrode sheet.

The present application also provides a battery, which includes the above-mentioned positive electrode sheet, or the positive electrode sheet manufactured by the above method.

### BENEFICIAL EFFECTS

In the positive electrode sheet provided in the present application the active material layer in the positive electrode sheet is designed in layers, where the gram capacity of the first lithium supplement in the first active material layer close to the current collector is relatively great, and the weight percentage of the first conductive agent is relatively great, while the gram capacity of the second lithium supplement in the second active material layer far from the current collector is relatively low, and the weight percentage of the second conductive agent is relatively low. In this way, under the same weight, the first lithium supplement can provide more lithium ions than the second lithium supplement, and compared with the second active material layer, the first active material layer has a denser conductive network, so that during the battery formation process (i.e., the initial charging and discharging process), the first lithium supplement has a lower lithium ion diffusion resistance when releases a large amount of lithium ions to the negative electrode, which optimizing the transmission of lithium ions, and further promoting the lithium iron manganese phosphate capacity in the positive electrode sheet to exert the function, especially the lithium iron manganese phosphate capacity in a portion of the positive electrode sheet close to the current collector to exert the function, thereby improving the cycle life of the lithium ion battery.

### BRIEF DESCRIPTION OF THE DRAWINGS

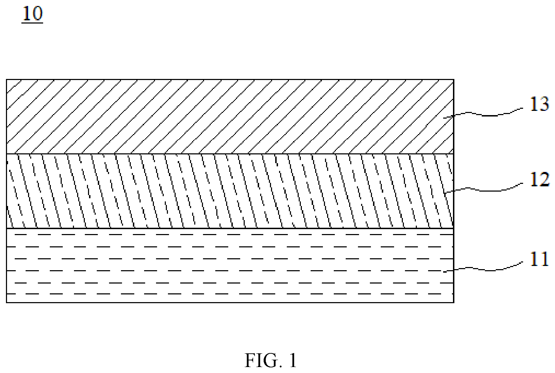

FIG. 1 schematically shows a cross-sectional view of a positive electrode sheet according to some embodiments of the present application.

List of reference signs: 10, positive electrode sheet; 11, current collector; 12, first active material layer; 13, second active material layer.

### DETAILED DESCRIPTION

In the description of present application, unless otherwise clearly specified and limited, the terms "connected with", "connect to", and "fixed to" should be understood in a broad sense, for example, it can be a fixed connection, a detachable connection, or an integrated connection; it can be a mechanical connection or an electrical connection; it can be a direct connection or an indirect connection through an intermediate medium, it can be the internal connection of two elements or the interaction relationship between two elements. For a person skilled in this field, the specific meanings of the above terms in the present application can be understood according to the specific circumstances.

In the present application, unless otherwise clearly specified and limited, a first feature being "above" or "below" a second feature may include the first and second features being in direct contact, or may include the first and second features being in contact not directly but through another feature between them. Moreover, a first feature being "above", "over" and "on" a second feature includes the first feature being directly above and obliquely above the second feature, and the first feature having a higher horizontal height than the second feature. A first feature being "below", "under" and "beneath" a second feature includes the first feature being directly below and obliquely below the second feature, and the first feature having a lower horizontal height than the second feature.

In the description of the present application, the terms "upper", "lower", "left", "right', "front", "rear" and other directions or positional relationships are based on the directions or positional relationships shown in the accompany drawings, and are for the convenience of description and simplification of operation, rather than indicating or implying that the device or element referred to must have a specific direction, be constructed and operated in a specific direction, and therefore cannot be understood as limiting the present application. In addition, the terms "first" and "second" are used to be distinguished in the description and have no special meaning.

In a first aspect, referring to FIG. 1, a positive electrode sheet 10 is provided according to some embodiments of the present application, and the positive electrode sheet 10 is used in a battery, such as a lithium-ion battery.

Specifically, the positive electrode sheet 10 includes a current collector 11, a first active material layer 12, and a second active material layer 13. The first active material layer 12 and the second active material layer 13 are disposed on the current collector 11, and the first active material layer 12 and the second active material layer 13 are sequentially disposed in a direction away from the current collector 11. The first active material layer 12 and the second active material layer 13 both contain a positive electrode active material lithium manganese iron phosphate (LMFP). The first active material layer 12 further contains a first conductive agent and a first lithium supplement, and the second active material layer 13 further contains a second conductive agent and a second lithium supplement. Among them, the gram capacity K1 of the first lithium supplement is greater than the gram capacity K2 of the second lithium supplement; the weight percentage D1 of the first conductive agent in the first active material layer 12 is greater than the weight percentage content D2 of the second conductive agent in the second active material layer 13.

The chemical formula of lithium manganese iron phosphate is LiFeₐMn_{b}PO₄, where 0<a<1, and 0<b<1. As an example, a is 0.001, 0.1, 0.2, 0.3, 0.4, 0.5, 0.6, 0.7, 0.8, 0.9 or 0.999; b is 0.001, 0.1, 0.2, 0.3, 0.4, 0.5, 0.6, 0.7, 0.8, 0.9 or 0.999.

Lithium supplements can replenish the irreversible lithium loss during the initial charging and discharging process. The gram capacity of a lithium supplement refers to the capacity provided by each gram of lithium supplement in the battery, usually expressed as mAh/g. The gram capacity of a lithium supplement varies depending on the specific ingredients.

As an example, lithium ferrite (LFO) is a lithium metal oxide with an inverse fluorite structure. The chemical formula of lithium ferrite is Li₅FeO₄, and its theoretical gram capacity can reach 700mAh/g.

As an example, the crystal structure of lithium nickel oxide (LNO) belongs to layered lithium metal oxide. The chemical formula of lithium nickel oxide is LiNiO₂, and its theoretical gram capacity can reach 400 mAh/g.

As an example, the chemical formula of a lithium-rich manganese-based material (LMR) is xLi₂MnO₃·(1-x)LiMO₂, where 0<x<1, and M includes at least a transition metal. The theoretical gram capacity of the lithium-rich manganese-based material can reach 250mAh/g.

The gram capacity K1 of the first lithium supplement is greater than the gram capacity K2 of the second lithium supplement. It can be understood that the first lithium supplement and the second lithium supplement are usually different substances.

The weight percentage of the first conductive agent in the first active material layer 12 is different from the weight percentage of the second conductive agent in the second active material layer 13, but the first conductive agent and the second conductive agent may be the same substance or different substances.

As an example, the first conductive agent and the second conductive agent may each independently include at least one of a conductive carbon black, a carbon nanotube (CNT), a mesoporous carbon material and a vapor grown carbon fiber (VGCF). As an example, the conductive carbon black may include at least one of an acetylene black, a super p (SP for short) and a Ketjen black. As an example, the carbon nanotube may include at least one of a single-walled carbon nanotube (SWCNT) and a multi-walled carbon nanotube (MWCNT). As an example, the mesoporous carbon material may include an ordered mesoporous carbon material CMK-3.

In the positive electrode sheet 10 provided in the embodiments of the present application, the active material layer is designed in layers, where the gram capacity of the first lithium supplement in the first active material layer 12 close to the current collector 11 is relatively great, and the weight percentage of the first conductive agent is relatively high, while the gram capacity of the second lithium supplement in the second active material layer 13 far from the current collector 11 is relatively low, and the weight percentage of the second conductive agent is relatively low. In this way, under the same weight, the first lithium supplement can provide more lithium ions than the second lithium supplement, and compared with the second active material layer 13, the first active material layer 12 has a denser conductive network, so that in the battery formation process (i.e., the initial charging and discharging process), has a lower lithium ion diffusion resistance when the first lithium supplement releases a large amount of lithium ions to the negative electrode, which optimizing the transmission of lithium ions, and further promoting the capacity of lithium iron manganese phosphate in the positive electrode sheet 10 to exert the function, especially the capacity of lithium iron manganese phosphate in the first active material layer 12 to exert the function, thereby improving the capacity and cycle life of the battery.

In some embodiments, the first lithium supplement includes at least one of LiNiO₂ and Li₅FeO₄. LiNiO₂ and Li₅FeO₄ have high gram capacities. In a battery of lithium iron manganese phosphate system, adding a small amount of LiNiO₂ and/or Li₅FeO₄ can effectively improve the energy density of the battery. However, LiNiO₂ and Li₅FeO₄ are unstable. They not only have the characteristics of strong water absorption, but also are prone to decomposition when exposed to air for a long time. By adding LiNiO₂ and/or Li₅FeO₄ to the first active material layer 12 and shielding the first active material layer 12 with the current collector 11 and the second active material layer 13, water vapor can be effectively isolated and the risk of deactivation of LiNiO₂ and/or Li₅FeO₄ can be reduced. Optionally, the first lithium supplement includes LNO. Compared with LFO, LNO has a more stable property and can more effectively promote the capacity of lithium iron manganese phosphate to exert the function.

In some embodiments, the second lithium supplement includes a lithium-rich manganese-based material with a chemical formula of xLi₂MnO₃·(1-x)LiMO₂, where 0<x<1, and M includes at least a transition metal. Although the gram capacity of the lithium-rich manganese-based material is not as high as that of LiNiO₂ and Li₅FeO₄, the lithium-rich manganese-based material is relatively stable, and the price of the lithium-rich manganese-based material is relatively low, which facilitates controlling the production cost of the battery. As an example, x is 0.001, 0.1, 0.2, 0.3, 0.4, 0.5, 0.6, 0.7, 0.8, 0.9 or 0.999. As an example, M includes at least one of Ni, Co and Mn.

In some embodiments, a ratio P1 of the weight percentage D2 of the second conductive agent in the second active material layer 13 to the weight percentage D1 of the first conductive agent in the first active material layer 12 is less than 0.78. In this way, the conductive system can be further optimized without changing the total amount of the conductive agent, promoting the lithium supplement to exert the function effectively. Optionally, P1 is less than 0.67. As an example, P1 is 0.1, 0.2, 0.3, 0.4, 0.5, 0.6 or 0.67.

In some embodiments, the weight percentage D1 of the first conductive agent in the first active material layer 12 is 0.3wt% to 1.4wt%. As an example, D1 is 0.3wt%, 0.5wt%, 0.6wt%, 0.8wt%, 1.0wt%, 1.2wt%, 1.3wt% or 1.4wt%.

In some embodiments, the weight percentage D2 of the second conductive agent in the second active material layer 13 is 0.15wt% to 0.7wt%. As an example, D2 is 0.15wt%, 0.2wt%, 0.3wt%, 0.4wt%, 0.5wt%, 0.6wt% or 0.7wt%.

In some embodiments, a weight percentage B2 of the second lithium supplement in the second active material layer 13 is greater than a weight percentage B1 of the first lithium supplement in the first active material layer 12. Compared with the first active material layer 12, the second active material layer 13 is closer to the surface of the positive electrode sheet 10, so that the transmission path of the lithium ions released by the second lithium supplement is shorter and the diffusion resistance is smaller. By increasing the weight percentage B2 of the second lithium supplement in the second active material layer 13, the transmission of lithium ions in the positive electrode sheet 10 can be further optimized as a whole.

In some embodiments, a ratio P2 of the weight percentage B2 of the second lithium supplement in the second active material layer 13 to the weight percentage B1 of the first lithium supplement in the first active material layer 12 is 1.25 to 6. Within this range, the capacity of the lithium iron manganese phosphate in the first active material layer 12 and the second active material layer 13 can exert the function effectively, thereby improving the capacity and cycle life of the battery. As an example, P2 is 1.25, 1.5, 2, 2.5, 3, 3.5, 4, 4.5, 5, 5.5 or 6.

In some embodiments, the weight percentage B1 of the first lithium supplement in the first active material layer 12 is 2.0wt% to 4.0wt%. As an example, B1 is 2.0wt%, 2.2wt%, 2.4wt%, 2.6wt%, 2.8wt%, 3.0wt%, 3.2wt%, 3.4wt%, 3.6wt%, 3.8wt% or 4.0wt%.

In some embodiments, the weight percentage B2 of the second lithium supplement in the second active material layer 13 is 5.0wt% to 15.0wt%. As an example, B2 is 5.0wt%, 5.5wt%, 6.0wt%, 6.5wt%, 7.0wt%, 7.5wt%, 8.0wt%, 8.5wt%, 9.0wt%, 9.5wt%, 10.0wt%, 10.5wt%, 11.0wt%, 11.5wt%, 12.0wt%, 12.5wt%, 13.0wt%, 13.5wt%, 14.0wt%, 14.5wt% or 15.0wt%.

In some embodiments, the first lithium supplement has an initial charging nominal gram capacity greater than 300mAh/g, and the second lithium supplement has an initial charging nominal gram capacity greater than 100mAh/g. The initial charging nominal gram capacity is also called the initial charging gram capacity, which refers to a ratio of a capacity that can be released by the lithium supplement to the weight of the lithium supplement during an initial charging process of the lithium-ion battery. The initial charging nominal gram capacity of the lithium supplement is only related to the material type of the lithium supplement. That is to say, when the material type of the lithium supplement is determined, the initial charging nominal gram capacity is a determined value, i.e., the initial charging nominal gram capacity is a property of the lithium supplement itself. As an example, the first lithium supplement includes at least one of LFO and LNO, the initial charging nominal gram capacity of LFO is 590mAh/g, and the initial charging nominal gram capacity of LNO is 350mAh/g. As an example, the second lithium supplement includes LMR, and the initial charging nominal gram capacity of LMR is 140mAh/g.

In some embodiments, a weight percentage H1 of lithium manganese iron phosphate in the first active material layer 12 is 91.0wt% to 95.3wt%. Within this range, the energy density of the battery can be effectively guaranteed. As an example, H1 is 91.0wt%, 92.0wt%, 93.0wt%, 94.0wt% or 95.3wt%.

In some embodiments, a weight percentage H2 of lithium manganese iron phosphate in the second active material layer 13 is 80.0wt% to 92.55.0wt%. Within this range, the energy density of the battery can be effectively guaranteed. As an example, H2 is 80.0wt%, 82.0wt%, 84.0wt%, 86.0wt%, 88.0wt%, 90.0wt% or 92.55wt%.

In some embodiments, each of the first active material layer 12 and the second active material layer 13 further includes a binder. Optionally, the binder includes at least one of a polyacrylic acid (PAA), a polyvinylidene fluoride (PVDF) and a polyvinyl alcohol (PVA).

In some embodiments, a content N1 of the binder in the first active material layer 12 is 1.5wt% to 2.0wt%, and a content N2 of the binder in the second active material layer 13 is 1.5wt% to 2.0wt%. As an example, N1 is 1.5wt%, 1.6wt%, 1.7wt%, 1.8wt%, 1.9wt% or 2.0wt%; N2 is 1.5wt%, 1.6wt%, 1.7wt%, 1.8wt%, 1.9wt% or 2.0wt%.

In some embodiments, each of the first active material layer 12 and the second active material layer 13 further includes a dispersant. Optionally, the dispersant includes at least one of an anhydride, a polyvinyl pyrrolidone, a sulfate ester salt, a poly(N-vinyl acetamide), a polyvinyl alcohol, a sulfonate and a polyethylene glycol.

In some embodiments, a content F1 of the dispersant in the first active material layer 12 is 0.1wt% to 0.2wt%, and a content F2 of the dispersant in the second active material layer 13 is 0.1wt% to 0.2wt%. As an example, F1 is 0.1wt%, 0.12wt%, 0.14wt%, 0.16wt%, 0.18wt% or 0.2wt%; F2 is 0.1wt%, 0.12wt%, 0.14wt%, 0.16wt%, 0.18wt% or 0.2wt%.

In some embodiments, the current collector 11 may be an aluminum foil, a carbon-coated aluminum foil, a safety-primed aluminum foil, an etched aluminum foil or an aluminum mesh. A thickness of the current collector 11 may be 5µm to 20µm, for example, 5µm, 10µm, 15µm or 20µm.

In a second aspect, according to some embodiments of the present application, a method for manufacturing a positive electrode sheet is provided to manufacture the abovementioned positive electrode sheet 10, and the method comprises:
S1. providing a first slurry, where the first slurry includes a lithium manganese iron phosphate, a first conductive agent and a first lithium supplement;
S2. providing a second slurry, where the second slurry includes a lithium manganese iron phosphate, a second conductive agent and a second lithium supplement;
S3. performing a film-forming process on the first slurry on a current collector to obtain a first active material layer;
S4. performing a film-forming process on the second slurry on a side of the first active material layer away from the current collector to obtain a second active material layer, and thereby obtaining a positive electrode sheet.

In some embodiments, the first slurry further includes a first solvent, and S3 includes:
S31. performing a coating process on the first slurry on the current collector to obtain a first wet film layer;
S32. performing a drying process on the first wet film layer to obtain the first active material layer.

In some embodiments, the second slurry further includes a second solvent, and S4 includes:
S41. performing a coating process on the second slurry on the first wet film layer to obtain a second wet film layer;
S42. performing a drying process on the second wet film layer to obtain the second active material layer.

Optionally, the coating process includes but is not limited to at least one of a gravure coating, a micro gravure coating, a spray coating and an electrospinning techniques. The first solvent and the second solvent include a N-methyl pyrrolidone (NMP).

In a third aspect, according to some embodiments of the present application, a battery is provided, and the battery comprises the abovementioned positive electrode sheet 10, or the positive electrode sheet manufactured by the abovementioned method.

In some embodiments, the battery is a lithium ion battery.

The following will be described in conjunction with specific embodiments.

### Embodiment 1

S1. manufacturing a positive electrode: applying a positive electrode slurry onto a carbon-coated aluminum foil current collector by double-layer coating, with an upper layer and a lower layer having the same density, and performing cold pressing and cutting process on it after drying.

The positive electrode slurry formula is as follows:
1. upper layer slurry: LMFP (LiFe_{0.5}Mn_{0.5}PO₄, 90.55wt%), LMR (7wt%), SP (0.3wt%), CNT (0.25wt%), PVDF (1.7wt%), dispersant (0.2wt%), where the chemical formula of the LMR is 0.6Li₂MnO₃ · 0.4LiNiO₂, the LMR and LMFP are added simultaneously during a stirring process, and the LMR is the lithium supplement of the upper layer.
2. lower layer slurry: LMFP (94.7wt%), LFO (2.5wt%), SP (0.6wt%), CNT (0.3wt%), PVDF (1.7wt%), dispersant (0.2wt%), where the LFO is added simultaneously with the LMFP during a stirring process, and the LFO is the lithium supplement for the lower layer.

S2. manufacturing a negative electrode: applying a negative electrode slurry onto the copper foil by a single-layer coating, and performing cold pressing and cutting process on it after drying.

The negative electrode slurry formula is as follows: graphite: SP:CMC:SBR=96.7:0.6:1.2:1.5 (weight ratio).

S3. manufacturing a battery: assembling of the positive electrode sheet and negative electrode sheet into a cell pack by stacking them, and then performing vacuum baking on it after assembling. After baking and the moisture content being qualified, injecting liquid is performed (1M LiPF₆ (EC:DEC:DMC=1:1:1, volume ratio)). After injecting, letting it stand for 24 hours to undergo the formatting and grading, and vacuum sealing it after the formatting and grading, then a soft-pack cell is rolled off the production line.

### Embodiment 2

The difference from Embodiment 1 is that the positive electrode slurry formula is as follows:
1. upper layer slurry: LMFP (90.55wt%), LMR (7wt%), SP (0.3wt%), CNT (0.25wt%), PVDF (1.7wt%), dispersant (0.2wt%), where the LMR and LMFP are added simultaneously during a stirring process, and the LMR is the lithium supplement of the upper layer;
2. lower layer slurry: LMFP (94.7wt%), LNO (2.5wt%), SP (0.6wt%), CNT (0.3wt%), PVDF (1.7wt%), dispersant (0.2wt%), where the LNO is added simultaneously with the LMFP during a stirring process, and the LNO is the lithium supplement of the lower layer.

The rest is the same as Embodiment 1.

### Embodiment 3

The difference from Embodiment 1 is that the positive electrode slurry formula is as follows:
1. upper layer slurry: LMFP (90.95wt %), LMR (7wt%), SP (0.1wt %), CNT (0.05wt %), PVDF (1.7wt%), dispersant (0.2wt%), where the LMR and LMFP are added simultaneously during a stirring process, and the LMR is the lithium supplement of the upper layer.
2. lower layer slurry: LMFP (94.7wt%), LFO (2.5wt%), SP (0.6wt%), CNT (0.3wt%), PVDF (1.7wt%), dispersant (0.2wt%), where the LFO is added simultaneously with the LMFP during a stirring process, and the LFO is the lithium supplement of the lower layer.

The rest is the same as Embodiment 1.

### Embodiment 4

The difference from Embodiment 1 is that the positive electrode slurry formula is as follows:
1. upper layer slurry: LMFP (90.5wt%), LMR (7wt%), SP (0.4wt%), CNT (0.2wt%), PVDF (1.7wt%), dispersant (0.2wt%), the LMR and LMFP are added simultaneously during a stirring process, and the LMR is the lithium supplement of the upper layer.
2. lower layer slurry: LMFP (94.7wt%), LFO (2.5wt%), SP (0.6wt%), CNT (0.3wt%), PVDF (1.7wt%), dispersant (0.2wt%), where the LFO is added simultaneously with the LMFP during a stirring process, and the LFO is the lithium supplement of the lower layer.

The rest is the same as Embodiment 1.

### Embodiment 5

The difference from Embodiment 1 is that the positive electrode slurry formula is as follows:
1. upper layer slurry: LMFP (90.4wt%), LMR (7wt%), SP (0.45wt%), CNT (0.25wt%), PVDF (1.7wt%), dispersant (0.2wt%), the LMR and LMFP are added simultaneously during a stirring process, and the LMR is the lithium supplement of the upper layer.
2. lower layer slurry: LMFP (94.7wt%), LFO (2.5wt%), SP (0.6wt%), CNT (0.3wt%), PVDF (1.7wt%), dispersant (0.2wt%), where the LFO is added simultaneously with the LMFP during a stirring process, and the LFO is the lithium supplement of the lower layer.

The rest is the same as Embodiment 1.

### Embodiment 6

The difference from Embodiment 1 is that the positive electrode slurry formula is as follows:
1. upper layer slurry: LMFP (90.55wt%), LMR (7wt%), SP (0.3wt%), CNT (0.25wt%), PVDF (1.7wt%) , dispersant (0.2wt%), the LMR and LMFP are added simultaneously during a stirring process, and the LMR is the lithium supplement of the upper layer.
2. lower layer slurry: LMFP (94.89wt%), LFO (2.5wt%), SP (0.5wt%), CNT (0.21wt%), PVDF (1.7wt%), dispersant (0.2wt%), where the LFO is added simultaneously with the LMFP during a stirring process, and the LFO is the lithium supplement of the lower layer.

The rest is the same as Embodiment 1.

### Embodiment 7

The difference from Embodiment 1 is that the positive electrode slurry formula is as follows:
1. upper layer slurry: LMFP (90.55wt%), LMR (7wt%), SP (0.3wt%), CNT (0.25wt%), PVDF (1.7wt%), dispersant (0.2wt%), where the LMR and LMFP are added simultaneously during a stirring process, and the LMR is the lithium supplement of the upper layer.
2. lower layer slurry: LMFP (94.5wt%), LFO (2.5wt%), SP (0.8wt%), CNT (0.3wt%), PVDF (1.7wt%), dispersant (0.2wt%), where the LFO is added simultaneously with the LMFP during a stirring process, and the LFO is the lithium supplement of the lower layer.

The rest is the same as Embodiment 1.

### Embodiment 8

The difference from Embodiment 1 is that the positive electrode slurry formula is as follows:
1. upper layer slurry: LMFP (90.55wt%), LMR (7wt%), SP (0.3wt%), CNT (0.25wt%), PVDF (1.7wt%), dispersant (0.2wt%), where the LMR and LMFP are added simultaneously during a stirring process, and the LMR is the lithium supplement of the upper layer.
2. lower layer slurry: LMFP (94.2wt%), LFO (2.5wt%), SP (0.9wt%), CNT (0.5wt%), PVDF (1.7wt%), dispersant (0.2wt%), where the LFO is added simultaneously with the LMFP during a stirring process, and the LFO is the lithium supplement of the lower layer.

The rest is the same as Embodiment 1.

### Embodiment 9

The difference from Embodiment 1 is that the positive electrode slurry formula is as follows:
1. upper layer slurry: LMFP (90.95wt %), LMR (7wt%), SP (0.1wt%), CNT (0.05wt%), PVDF (1.7wt%), dispersant (0.2wt%), where the LMR and LMFP are added simultaneously during a stirring process, and the LMR is the lithium supplement of the upper layer.
2. lower layer slurry: LMFP (95.3wt%), LFO (2.5wt%), SP (0.2wt%), CNT (0.1wt%), PVDF (1.7wt%), dispersant (0.2wt%), where the LFO is added simultaneously with the LMFP during a stirring process, and the LFO is the lithium supplement of the lower layer.

The rest is the same as Embodiment 1.

### Embodiment 10

The difference from Embodiment 1 is that the positive electrode slurry formula is as follows:
1. upper layer slurry: LMFP (90.4wt%), LMR (7wt%), SP (0.5wt%), CNT (0.2wt%), PVDF (1.7wt%), dispersant (0.2wt%), where the LMR and LMFP are added simultaneously during a stirring process, and the LMR is the lithium supplement of the upper layer.
2. lower layer slurry: LMFP (94.4wt%), LFO (2.5wt%), SP (0.9wt%), CNT (0.5wt%), PVDF (1.7wt%), dispersant (0.2wt%), where the LFO is added simultaneously with the LMFP during a stirring process, and the LFO is the lithium supplement of the lower layer.

The rest is the same as Embodiment 1.

### Embodiment 11

The difference from Embodiment 1 is that the positive electrode slurry formula is as follows:
1. upper layer slurry: LMFP (90.55wt%), LMR (7wt%), SP (0.3wt%), CNT (0.25wt%), PVDF (1.7wt%), dispersant (0.2wt%), where the LMR and LMFP are added simultaneously during a stirring process, and the LMR is the lithium supplement of the upper layer.
2. lower layer slurry: LMFP (93.2wt%), LFO (4.0wt%), SP (0.6wt%), CNT (0.3wt%), PVDF (1.7wt%), dispersant (0.2wt%), where the LFO is added simultaneously with the LMFP during a stirring process, and the LFO is the lithium supplement of the lower layer.

The rest is the same as Embodiment 1.

### Embodiment 12

The difference from Embodiment 1 is that the positive electrode slurry formula is as follows:
1. upper layer slurry: LMFP (90.55wt%), LMR (7wt%), SP (0.3wt%), CNT (0.25wt%), PVDF (1.7wt%), dispersant (0.2wt%), where the LMR and LMFP are added simultaneously during a stirring process, and the LMR is the lithium supplement of the upper layer.
2. lower layer slurry: LMFP (95.2wt%), LFO (2.0wt%), SP (0.6wt%), CNT (0.3wt%), PVDF (1.7wt%), dispersant (0.2wt%), where the LFO is added simultaneously with the LMFP during a stirring process, and the LFO is the lithium supplement of the lower layer.

The rest is the same as Embodiment 1.

### Embodiment 13

The difference from Embodiment 1 is that the positive electrode slurry formula is as follows:
1. upper layer slurry: LMFP (92.55wt%), LMR (5wt%), SP (0.3wt%), CNT (0.25wt%), PVDF (1.7wt%), dispersant (0.2wt%), the LMR and LMFP are added simultaneously during a stirring process, and the LMR is the lithium supplement of the upper layer.
2. lower layer slurry: LMFP (94.7wt%), LFO (2.5wt%), SP (0.6wt%), CNT (0.3wt%), PVDF (1.7wt%), dispersant (0.2wt%), where the LFO is added simultaneously with the LMFP during a stirring process, and the LFO is the lithium supplement of the lower layer.

The rest is the same as Embodiment 1.

### Embodiment 14

The difference from Embodiment 1 is that the positive electrode slurry formula is as follows:
1. upper layer slurry: LMFP (85.05wt%), LMR (12.5wt%), SP (0.3wt%), CNT (0.25wt%), PVDF (1.7wt%), dispersant (0.2wt%), the LMR and LMFP are added simultaneously during a stirring process, and the LMR is the lithium supplement of the upper layer.
2. lower layer slurry: LMFP (94.7wt%), LFO (2.5wt%), SP (0.6wt%), CNT (0.3wt%), PVDF (1.7wt%), dispersant (0.2wt%), where the LFO is added simultaneously with the LMFP during a stirring process, and the LFO is the lithium supplement of the lower layer.

The rest is the same as Embodiment 1.

### Embodiment 15

The difference from Embodiment 1 is that the positive electrode slurry formula is as follows:
1. upper layer slurry: LMFP (82.55wt%), LMR (15wt%), SP (0.3wt%), CNT (0.25wt%), PVDF (1.7wt%), dispersant (0.2wt%), the LMR and LMFP are added simultaneously during a stirring process, and the LMR is the lithium supplement of the upper layer.
2. lower layer slurry: LMFP (94.7wt%), LFO (2.5wt%), SP (0.6wt%), CNT (0.3wt%), PVDF (1.7wt%), dispersant (0.2wt%), where the LFO is added simultaneously with the LMFP during a stirring process, and the LFO is the lithium supplement of the lower layer.

The rest is the same as Embodiment 1.

### Embodiment 16

The difference from Embodiment 1 is that the positive electrode slurry formula is as follows:
1. upper layer slurry: LMFP (92.55wt %), LMR (5wt%), SP (0.3wt%), CNT (0.25wt%), PVDF (1.7wt%), dispersant (0.2wt%), the LMR and LMFP are added simultaneously during a stirring process, and the LMR is the lithium supplement of the upper layer.
2. lower layer slurry: LMFP (93.9wt%), LFO (3.3wt%), SP (0.6wt%), CNT (0.3wt%), PVDF (1.7wt%), dispersant (0.2wt%), where the LFO is added simultaneously with the LMFP during a stirring process, and the LFO is the lithium supplement of the lower layer.

The rest is the same as Embodiment 1.

### Embodiment 17

The difference from Embodiment 1 is that the positive electrode slurry formula is as follows:
1. upper layer slurry: LMFP (92.55wt%), LMR (5wt%), SP (0.3wt%), CNT (0.25wt%), PVDF (1.7wt%), dispersant (0.2wt%), the LMR and LMFP are added simultaneously during a stirring process, and the LMR is the lithium supplement of the upper layer.
2. lower layer slurry: LMFP (93.2wt%), LFO (4wt%), SP (0.6wt%), CNT (0.3wt%), PVDF (1.7wt%), dispersant (0.2wt%), where the LFO is added simultaneously with the LMFP during a stirring process, and the LFO is the lithium supplement of the lower layer.

The rest is the same as Embodiment 1.

### Embodiment 18

The difference from Embodiment 1 is that the positive electrode slurry formula is as follows:
1. upper layer slurry: LMFP (90.55wt%), LMR (7wt%), SP (0.3wt%), CNT (0.25wt%), PVDF (1.7wt%), dispersant (0.2wt%), where the LMR and LMFP are added simultaneously during a stirring process, and the LMR is the lithium supplement of the upper layer;
2. lower layer slurry: LMFP (94.7wt%), LFO (1.25wt %), LNO (1.25wt%), SP (0.6wt %), CNT (0.3wt%), PVDF (1.7wt%), dispersant (0.2wt%), where the LNO and LFO are added simultaneously with the LMFP during a stirring process, and the LNO and LFO are lithium supplements of the lower layer .

The rest is the same as Embodiment 1.

### Comparative Embodiment 1

The difference from Embodiment 6 is the step S1 (manufacturing a positive electrode):
applying a positive electrode slurry onto a carbon-coated aluminum foil current collector by single-layer coating, and performing cold pressing and cutting process after drying.

The positive electrode slurry formula is as follows: LMFP (92.72wt%), LMR (4.75wt%), SP (0.35wt%), CNT (0.28wt%), PVDF (1.7wt%), and dispersant (0.2wt%), where the LMR and LMFP are added simultaneously during the stirring process, and the LMR is a lithium supplement.

The rest is the same as Embodiment 1.

### Comparative Embodiment 2

The difference from Embodiment 6 is the step S1 (manufacturing a positive electrode):
applying a positive electrode slurry onto a carbon-coated aluminum foil current collector by single-layer coating, and performing cold pressing and cutting process after drying.

The positive electrode slurry formula is as follows: LMFP (92.72wt%), LFO (4.75wt%), SP (0.35wt%), CNT (0.28wt%), PVDF (1.7wt%), and dispersant (0.2wt%), where the LFO is added simultaneously with the LMFP during the stirring process, and the LFO is a lithium supplement.

The rest is the same as Embodiment 1.

### Comparative Embodiment 3

The difference from Embodiment 6 is that the positive electrode slurry formula is as follows:
1. upper layer slurry: LMFP (90.47wt%), LMR (7wt%), SP (0.35wt%), CNT (0.28wt%), PVDF (1.7wt%), dispersant (0.2wt%), where the LMR and LMFP are added simultaneously during the stirring process, and the LMR is the lithium supplement for the upper layer.
2. lower layer slurry: LMFP (94.97wt%), LFO (2.5wt%), SP (0.35wt%), CNT (0.28wt%), PVDF (1.7wt%), dispersant (0.2wt%), where the LFO was added simultaneously with the LMFP during the stirring process, and the LFO is the lithium supplement of the lower layer.

The rest is the same as Embodiment 1.

### Comparative Embodiment 4

The difference from Embodiment 6 is that the positive electrode slurry formula is as follows:
1. upper layer slurry: LMFP (90.39wt%), LMR (7wt%), SP (0.5wt%), CNT (0.21wt%), PVDF (1.7wt%), dispersant (0.2wt%), where the LMR and LMFP are added simultaneously during the stirring process, and the LMR is the lithium supplement of the upper layer.
2. lower layer slurry: LMFP (95.05wt%), LFO (2.5wt%), SP (0.3wt%), CNT (0.25wt%), PVDF (1.7wt%), dispersant (0.2wt%), where the LFO is added simultaneously with the LMFP during the stirring process, and the LFO is the lithium supplement of the lower layer.

The rest is the same as Embodiment 1.

### Comparative Embodiment 5

The difference from Embodiment 6 is that the positive electrode slurry formula is as follows:
1. upper layer slurry: LMFP (94.89wt%), LFO (2.5wt%), SP (0.5wt%), CNT (0.21wt%), PVDF (1.7wt%), dispersant (0.2wt%), where the LFO is added simultaneously with the LMFP during the stirring process, and the LFO is the lithium supplement of the upper layer;
2. lower layer slurry: LMFP (90.55wt%), LMR (7wt%), SP (0.3wt%), CNT (0.25wt%), PVDF (1.7wt%), dispersant (0.2wt%), where the LMR and LMFP are added simultaneously during the stirring process, and the LMR is the lithium supplement of the lower layer.

The rest is the same as Embodiment 1.

The parameters of each embodiment and comparative embodiment are recorded in Table 1.

**Table 1**

| Group | Positive electrode active material layer | Positive electrode active material | | Conductive agent | | Lithium supplement | | | Binder | Dispersant |
|---|---|---|---|---|---|---|---|---|---|---|
| | | Material | Content | Content | Ratio | Mater -ial | Content | Ratio | Content | Content |
| Embodiment 1 | Upper layer | LMFP | 90.55 | 0.55 | 0.61 | LMR | 7 | 2.8 | 1.7 | 0.2 |
| | Lower layer | LMFP | 94.7 | 0.9 | | LFO | 2.5 | | 1.7 | 0.2 |
| Embodiment 2 | Upper layer | LMFP | 90.55 | 0.55 | 0.61 | LMR | 7 | 2.8 | 1.7 | 0.2 |
| | Lower layer | LMFP | 94.7 | 0.9 | | LNO | 2.5 | | 1.7 | 0.2 |
| Embodiment 3 | Upper layer | LMFP | 90.95 | 0.15 | 0.17 | LMR | 7 | 2.8 | 1.7 | 0.2 |
| | Lower layer | LMFP | 94.7 | 0.9 | | LFO | 2.5 | | 1.7 | 0.2 |
| Embodiment 4 | Upper layer | LMFP | 90.5 | 0.6 | 0.67 | LMR | 7 | 2.8 | 1.7 | 0.2 |
| | Lower layer | LMFP | 94.7 | 0.9 | | LFO | 2.5 | | 1.7 | 0.2 |
| Embodiment 5 | Upper layer | LMFP | 90.4 | 0.7 | 0.78 | LMR | 7 | 2.8 | 1.7 | 0.2 |
| | Lower layer | LMFP | 94.7 | 0.9 | | LFO | 2.5 | | 1.7 | 0.2 |
| Embodiment 6 | Upper layer | LMFP | 90.55 | 0.55 | 0.78 | LMR | 7 | 2.8 | 1.7 | 0.2 |
| | Lower layer | LMFP | 94.89 | 0.71 | | LFO | 2.5 | | 1.7 | 0.2 |
| Embodiment 7 | Upper layer | LMFP | 90.55 | 0.55 | 0.5 | LMR | 7 | 2.8 | 1.7 | 0.2 |
| | Lower layer | LMFP | 94.5 | 1 .1 | | LFO | 2.5 | | 1.7 | 0.2 |
| Emb-odim-ent 8 | Upper layer | LMFP | 90.55 | 0.55 | 0.39 | LMR | 7 | 2.8 | 1.7 | 0.2 |
| | Lower layer | LMFP | 94.2 | 1.4 | | LFO | 2.5 | | 1.7 | 0.2 |
| Embodiment 9 | Upper layer | LMFP | 90.95 | 0.15 | 0.5 | LMR | 7 | 2.8 | 1.7 | 0.2 |
| | Lower layer | LMFP | 95.3 | 0.3 | | LFO | 2.5 | | 1.7 | 0.2 |
| Embodiment 10 | Upper layer | LMFP | 90.4 | 0.7 | 0.5 | LMR | 7 | 2.8 | 1.7 | 0.2 |
| | Lower layer | LMFP | 94.2 | 1.4 | | LFO | 2.5 | | 1.7 | 0.2 |
| Embodiment t 11 | Upper layer | LMFP | 90.55 | 0.55 | 0.61 | LMR | 7 | 1.75 | 1.7 | 0.2 |
| | Lower layer | LMFP | 93.2 | 0.9 | | LFO | 4 | | 1.7 | 0.2 |
| Embodiment 12 | Upper layer | LMFP | 90.55 | 0.55 | 0.61 | LMR | 7 | 3.5 | 1.7 | 0.2 |
| | Lower layer | LMFP | 95.2 | 0.9 | | LFO | 2 | | 1.7 | 0.2 |
| Embodiment 13 | Upper layer | LMFP | 92.55 | 0.55 | 0.61 | LMR | 5 | 2 | 1.7 | 0.2 |
| | Lower layer | LMFP | 94.7 | 0.9 | | LFO | 2.5 | | 1.7 | 0.2 |
| Embodiment 14 | Upper layer | LMFP | 85.05 | 0.55 | 0.61 | LMR | 12.5 | 5 | 1.7 | 0.2 |
| | Lower layer | LMFP | 94.7 | 0.9 | | LFO | 2.5 | | 1.7 | 0.2 |
| Embodiment 15 | Upper layer | LMFP | 82.55 | 0.55 | 0.61 | LMR | 1 5 | 6 | 1.7 | 0.2 |
| | Lower layer | LMFP | 94.7 | 0.9 | | LFO | 2.5 | | 1.7 | 0.2 |
| Embodiment 16 | Upper layer | LMFP | 92.55 | 0.55 | 0.61 | LMR | 5 | 1.5 | 1.7 | 0.2 |
| | Lower layer | LMFP | 93.9 | 0.9 | | LFO | 3.3 | | 1.7 | 0.2 |
| Embodiment 17 | Upper layer | LMFP | 92.55 | 0.55 | 0.61 | LMR | 5 | 1.25 | 1.7 | 0.2 |
| | Lower layer | LMFP | 93.2 | 0.9 | | LFO | 4 | | 1.7 | 0.2 |
| Embodiment 18 | Upper layer | LMFP | 90.55 | 0.55 | 0.61 | LMR | 7 | 2.8 | 1.7 | 0.2 |
| | Lower layer | LMFP | 94.7 | 0.9 | | LFO+ LNO | 2.5 | | 1.7 | 0.2 |
| Comparative Embodiment 1 | Single layer | LMFP | 92.72 | 0.63 | / | LMR | 4.75 | / | 1.7 | 0.2 |
| Comparative Embodiment 2 | Single layer | LMFP | 92.72 | 0.63 | / | LFO | 4.75 | / | 1.7 | 0.2 |
| Comparative Embodiment 3 | Upper layer | LMFP | 90.47 | 0.63 | 1 | LMR | 7 | 2.8 | 1.7 | 0.2 |
| | Lower layer | LMFP | 94.97 | 0.63 | | LFO | 2.5 | | 1.7 | 0.2 |
| Comparative | Upper layer | LMFP | 90.39 | 0.71 | 1.29 | LMR | 7 | 2.8 | 1.7 | 0.2 |
| Embodiment 4 | Lower layer | LMFP | 95.05 | 0.55 | | LFO | 2.5 | | 1.7 | 0.2 |
| Comparative Embodiment 5 | Upper layer | LMFP | 94.89 | 0.71 | 1.29 | LFO | 2.5 | 0.36 | 1.7 | 0.2 |
| | Lower layer | LMFP | 90.55 | 0.55 | | LMR | 7 | | 1.7 | 0.2 |

The unit of the content of each material in Table 1 is wt%.

The batteries manufactured in the above embodiments and comparative examples were tested as follows:
1. gram capacity test: at 25°C, the battery is charged at a rate of 0.33C, and then be discharged at 0.33C after it is fully charged to obtain the discharge capacity. The capacity calibration is performed to obtain the gram capacity. The results are recorded in Table 2.
2. capacity retention rate test: at 25°C, the battery is subjected to a 1C/1C cycle test. The capacity retention rate was calculated by dividing the capacity after 500 cycles by the initial capacity, thereby obtaining the capacity retention rate after the cycle. The test results are recorded in Table 2.
3. direct current internal resistance (DCR) growth rate test: DCR test was performed at 1C@10s 70%SOC DCR; at 25°C, the battery was subjected to 1C/1C cycle test. The DCR growth rate was calculated by dividing the difference between the DCR after 500 cycles and the initial DCR by the initial DCR, thereby obtaining the DCR growth rate after the cycle. The test results are recorded in Table 2.

**Table 2**

| Group | Gram capacity/mAh/g | Capacity retention rate/% | DCR growth rate/% |
|---|---|---|---|
| Embodiment 1 | 141.5 | 96.5 | 8.5 |
| Embodiment 2 | 142.8 | 97.1 | 7.8 |
| Embodiment 3 | 140.2 | 95.3 | 8.2 |
| Embodiment 4 | 140.3 | 96.1 | 8.9 |
| Embodiment 5 | 139.8 | 96.8 | 8.6 |
| Embodiment 6 | 141.2 | 95.3 | 8.1 |
| Embodiment 7 | 140.0 | 96.7 | 8.2 |
| Embodiment 8 | 139.6 | 97.3 | 7.6 |
| Embodiment 9 | 142.3 | 95.5 | 8.5 |
| Embodiment 10 | 139.6 | 97.3 | 7.8 |
| Embodiment 11 | 142.1 | 96.2 | 8.2 |
| Embodiment 12 | 141.1 | 96.2 | 8.9 |
| Embodiment 13 | 1 41.3 | 95.8 | 8.9 |
| Embodiment 14 | 141.5 | 96.4 | 8.6 |
| Embodiment 15 | 140.8 | 96.2 | 8.8 |
| Embodiment 16 | 142.0 | 96.8 | 8.2 |
| Embodiment 17 | 140.6 | 95.6 | 6.8 |
| Embodiment 18 | 141.8 | 96.5 | 5.6 |
| Comparative Embodiment 1 | 136.8 | 94.2 | 9.9 |
| Comparative Embodiment 2 | 134.0 | 94.9 | 9.7 |
| Comparative Embodiment 3 | 137.6 | 94.3 | 9.6 |
| Comparative Embodiment 4 | 137.5 | 94.1 | 9.8 |
| Comparative Embodiment 5 | 133.1 | 92.0 | 10.8 |

From the results in Table 2, it can be seen that:

The gram capacities of the batteries provided by Embodiments 1 to 18 are maintained as 139.6mAh/g or above, and the capacity retention rates are 95.3% or above, while the DCR growth rates are maintained as 8.9% or below.

Further, Embodiment 6 is compared with Comparative Embodiments 1 to 5. When the total content of each material in the electrode sheet is the same, compared with Comparative Embodiments 1 and 2 (the positive electrode is provided with only a single layer of active material layer, and the lithium supplement is simply mixed in the active material layer), Comparative Embodiment 3 (the active material layer is arranged in layers, but the content of the conductive agent in each of the upper and lower active material layers is the same), Comparative Embodiment 4 (the active material layer is arranged in layers, but the content of the conductive agent in the lower active material layer is less than that in the upper layer), and Comparative Embodiment 5 (the active material layer is arranged in layers, but the content of the conductive agent in the lower active material layer is less than that in the upper layer, and the gram capacity of the lithium supplement in the upper layer is greater than that in the lower layer), both gram capacity and capacity retention rate of the battery in Embodiment 6 are improved, while the DCR growth rate is reduced. This shows that by arranging the active material layer in layers, where the gram capacity of the lithium supplement in the inner layer (i.e., the lower layer) is greater than the gram capacity of the lithium supplement in the outer layer (i.e., the upper layer), and the content of the conductive agent in the inner layer is greater than the content of the conductive agent in the outer layer, the capacity of the LMFP in the active material layers can be prompted to exert the function effectively, which can improve the battery cycle stability and reduce the battery DCR growth rate, thereby improving the performance of the battery.

## Claims

1. A positive electrode sheet, comprising:
a current collector and a first active material layer and a second active material layer disposed on the current collector, wherein the first active material layer and the second active material layer are sequentially disposed in a direction away from the current collector; each of the first active material layer and the second active material layer contains a lithium iron manganese phosphate; the first active material layer further contains a first conductive agent and a first lithium supplement, and the second active material layer further contains a second conductive agent and a second lithium supplement; a gram capacity K1 of the first lithium supplement is greater than a gram capacity K2 of the second lithium supplement; a weight percentage D1 of the first conductive agent in the first active material layer is greater than a weight percentage D2 of the second conductive agent in the second active material layer.

2. The positive electrode sheet according to claim 1, wherein a ratio P1 of the weight percentage D2 of the second conductive agent in the second active material layer to the weight percentage D1 of the first conductive agent in the first active material layer is less than 0.78.

3. The positive electrode sheet according to claim 1, wherein a weight percentage B2 of the second lithium supplement in the second active material layer is greater than a weight percentage B1 of the first lithium supplement in the first active material layer.

4. The positive electrode sheet according to claim 3, wherein a ratio P2 of the weight percentage B2 of the second lithium supplement in the second active material layer to the weight percentage B1 of the first lithium supplement in the first active material layer is 1.25 to 6.

5. The positive electrode sheet according to any one of claims 1 to 4, wherein the weight percentage B1 of the first lithium supplement in the first active material layer is 2.0wt% to 4.0wt%; and/or,
the weight percentage B2 of the second lithium supplement in the second active material layer is 5.0wt% to 15.0wt%.

6. The positive electrode sheet according to any one of claims 1 to 4, wherein the weight percentage D1 of the first conductive agent in the first active material layer is 0.3wt% to 1.4wt%; and/or
the weight percentage D2 of the second conductive agent in the second active material layer is 0.15wt% to 0.7wt%.

7. The positive electrode sheet according to any one of claims 1 to 4, wherein the first lithium supplement comprises at least one of LiNiO₂ and Li₅FeO₄; and/or, the second lithium supplement comprises a lithium-rich manganese-based material, and a chemical formula of the lithium-rich manganese-based material is xLi₂MnO₃·(1-x)LiMO₂, wherein 0<x<1, and M comprises at least a transition metal.

8. The positive electrode sheet according to any one of claims 1 to 4, wherein an initial charging nominal gram capacity of the first lithium supplement is greater than 300mAh/g; and/or, an initial charging nominal gram capacity of the second lithium supplement is greater than 100mAh/g.

9. The positive electrode sheet according to any one of claims 1 to 4, wherein a weight percentage H1 of the lithium manganese iron phosphate in the first active material layer is 91.0wt% to 95.3wt%; and/or,
a weight percentage H2 of the lithium manganese iron phosphate in the second active material layer is 80.0wt% to 92.55.0wt%.

10. The positive electrode sheet according to any one of claims 1 to 4, wherein each of the first active material layer and the second active material layer further comprises a binder, and a content N1 of the binder in the first active material layer is 1.5wt% to 2.0wt%, and/or, a content N2 of the binder in the second active material layer is 1.5wt% to 2.0wt%.

11. The positive electrode sheet according to any one of claims 1 to 4, wherein each of the first active material layer and the second active material layer further comprises a dispersant, and a content F1 of the dispersant in the first active material layer is 0.1wt% to 0.2wt%, and/or, a content F2 of the dispersant in the second active material layer is 0.1wt% to 0.2wt%.

12. A method for manufacturing a positive electrode sheet, for manufacturing the positive electrode sheet as claimed in any one of claims 1 to 11, the method for manufacturing the positive electrode sheet comprising:
providing a first slurry, wherein the first slurry comprises a lithium manganese iron phosphate, a first conductive agent and a first lithium supplement;
providing a second slurry, wherein the second slurry comprises a lithium manganese iron phosphate, a second conductive agent and a second lithium supplement;
performing a film-forming process on the first slurry on a current collector to obtain a first active material layer;
performing a film-forming process on the second slurry on a side of the first active material layer away from the current collector to obtain a second active material layer, thereby obtaining the positive electrode sheet.

13. A battery, comprising the positive electrode sheet as claimed in any one of claims 1 to 11, or, the positive electrode sheet manufactured by the method as claimed in claim 12.
